# EUROPEAN PATENT SPECIFICATION

(11) **EP 2 177 560 B1**
(45) Date of publication and mention of the grant of the patent: **28.09.2011**
(21) Application number: 09013085.7
(22) Date of filing: 16.10.2009
(51) Int. Cl.: C08K 5/00, C08K 3/00, C08K 3/26

(54) **Fluorosilicone rubber composition and cured product thereof**
Fluorsilikongummizusammensetzung und gehärtetes Produkt daraus
Composition de caoutchouc de fluorosilicone et produit durci correspondant

(30) Priority: 17.10.2008 JP 2008268136
(43) Date of publication of application: 21.04.2010
(73) Proprietor: Shin-Etsu Chemical Co., Ltd., Tokyo (JP)
(72) Inventor: Hayashida, Osamu, Annaka-shi, Gunma-ken (JP); Koike, Yoshiaki, Annaka-shi, Gunma-ken (JP); Oishi, Kazuhiro, Annaka-shi, Gunma-ken (JP)
(74) Representative: Peters, Hajo

(56) References cited:
- EP-A- 0 522 733
- WO-A-2007/135875
- GB-A- 2 030 582
- US-A- 4 988 758

## Description

### BACKGROUND OF THE INVENTION

### 1. Field of the Invention

The present invention relates to a fluorosilicone rubber composition that exhibits excellent heat resistance after molding, and also relates to a cured product of the composition and a fluorosilicone rubber molded item formed from such a cured product.

### 2. Description of the Prior Art

Fluorosilicone rubbers exhibit excellent cold resistance, oil resistance, fuel oil resistance and compression recovery properties and the like, and are widely used in components for transport vehicles such as automobiles and aircraft, and in components for oil tankers. Of these, in those cases where the fluorosilicone rubber is used for an automobile component, and particularly when used for a turbo air hose, the rubber requires favorable thermal stability at high temperatures of 150°C or higher, and occasionally temperatures of 200°C or higher. However, it is known that at high temperatures of 200°C or higher, fluorosilicone rubbers are more susceptible to siloxane unit decomposition and oxidative degradation than dimethylsilicone rubbers. According to the study of the present inventors, it is thought that the reason for this susceptibility to decomposition is that hydrofluoric acid (HF) is generated during the oxidative degradation process of trifluoropropyl groups, and that this hydrofluoric acid then causes cleavage of the silicone polymer (namely, the Si-O-Si bonds).

A variety of additives have been proposed for improving the heat resistance of fluorosilicone rubbers (for example, see Patent Documents 1 to 3). However, even when a composition containing such additives is used, a fluorosilicone rubber having satisfactory heat resistance is still unobtainable.
[Patent Document 1] JP 60-173051 A
[Patent Document 2] USP 5,340,866
[Patent Document 3] JP 9-286919 A

### SUMMARY OF THE INVENTION

The present invention has been developed in light of the above circumstances, and has an object of providing a fluorosilicone rubber composition which forms a molded item that suffers minimal deterioration in physical properties even after exposure to heat of 200°C or higher, as well as a cured product of the composition and a fluorosilicone rubber molded item formed from such a cured product.

As a result of intensive investigation aimed at achieving the above object, the inventors of the present invention discovered that by adding a predetermined amount of a hydrotalcite-based inorganic anion exchanger to a fluorosilicone rubber composition, the heat resistance of the resulting molded item could be improved.

In other words, a first aspect of the present invention provides a fluorosilicone rubber composition comprising:
(A) an organopolysiloxane with a viscosity at 25°C of not less than 10,000 mPa·s, represented by an average composition formula (1) shown below:

   R¹ₐR²_{b}R³_{c}SiO(4-a-c)_{/2} (1)

   (wherein
   R¹ represents a trifluoropropyl group,
   each R² independently represents an unsubstituted or substituted monovalent aliphatic unsaturated hydrocarbon group of 2 to 8 carbon atoms,
   each R³ independently represents a hydroxyl group, an unsubstituted monovalent aliphatic saturated hydrocarbon group of 1 to 8 carbon atoms, or an unsubstituted or substituted monovalent aromatic hydrocarbon group of 6 to 8 carbon atoms,
   a is a positive number within a range from 0.96 to 1.01, b is a positive number within a range from 0.0001 to 0.01, and c is a positive number within a range from 0.96 to 1.06, provided that a+b+c satisfies 1.98 ≤ a+b+c ≤ 2.02),
   in an amount of 100 parts by mass,
(B) a silica-based filler, in an amount of 2 to 100 parts by mass,
(C) a hydrotalcite-based inorganic anion exchanger, in an amount of 0.1 to 20 parts by mass, and
(D) a curing agent, in an effective amount.

A second aspect of the present invention provides a cured product obtained by curing the above composition.

A third aspect of the present invention provides a fluorosilicone rubber molded item formed from the above cured product.

By including a predetermined amount of a hydrotalcite-based inorganic anion exchanger, the fluorosilicone rubber composition of the present invention is able to form a fluorosilicone rubber molded item (a cured fluorosilicone rubber elastomer) that exhibits excellent heat resistance even under high-temperature conditions of 200°C or higher, and particularly 225°C or higher. This molded item is ideal for components that are exposed to heat of 200°C or higher, and particularly 225°C or higher, and also require favorable oil resistance, including automobile components such as turbo air hoses.

### DETAILED DESCRIPTION OF THE PREFERRED EMBODIMENTS

A more detailed description of the present invention is provided below. In this description, viscosity values represent values measured using a rotational viscometer.

### [Component (A)]

The organopolysiloxane of the component (A) is an organopolysiloxane represented by the above average composition formula (1) with a viscosity at 25°C of not less than 10,000 mPa·s. The component (A) may be either a single compound or a combination of two or more different compounds.

In the trifluoropropyl group represented by R¹, the fluorine atoms may be bonded to any of the carbon atoms at the positions 1 to 3, although a 3,3,3-trifluoropropyl group is typical as R¹.

Each R² independently represents an unsubstituted or substituted monovalent aliphatic unsaturated hydrocarbon group of 2 to 8 carbon atoms, and preferably 2 to 4 carbon atoms, and is particularly a monovalent hydrocarbon group having an aliphatic unsaturated double bond. Specific examples of R² include alkenyl groups such as a vinyl group, allyl group, propenyl group, isopropenyl group, butenyl group, isobutenyl group or hexenyl group; cycloalkenyl groups such as a cyclohexenyl group; and substituted alkenyl groups or cycloalkenyl groups in which some or all of the hydrogen atoms bonded to carbon atoms within the above groups have been substituted with halogen atoms (such as a fluorine atom, chlorine atom, bromine atom or iodine atom) or the like.

The organopolysiloxane of the component (A) preferably includes at least two (typically from 2 to 50, and preferably from 2 to 20) of these monovalent aliphatic unsaturated hydrocarbon groups represented by R² within each molecule. The monovalent aliphatic unsaturated hydrocarbon groups represented by R² may be present at the molecular chain terminals (that is, bonded to the silicon atoms at the molecular chain terminals), present as molecular side chains (that is, bonded to non-terminal silicon atoms within the molecular chain), or present both at the terminals and as side chains.

Each R³ independently represents a hydroxyl group, an unsubstituted monovalent aliphatic saturated hydrocarbon group of 1 to 8 carbon atoms, and preferably 1 to 4 carbon atoms, or an unsubstituted or substituted monovalent aromatic hydrocarbon group of 6 to 8 carbon atoms, and preferably 6 or 7 carbon atoms. In those cases where R³ represents a monovalent aliphatic saturated hydrocarbon group, specific examples include alkyl groups such as a methyl group, ethyl group, propyl group, isopropyl group, butyl group, isobutyl group, tert-butyl group, pentyl group or hexyl group; and cycloalkyl groups such as a cyclohexyl group. In those cases where R³ represents a monovalent aromatic hydrocarbon group, specific examples include aryl groups such as a phenyl group or tolyl group; aralkyl groups such as a benzyl group; and substituted aryl groups or aralkyl groups in which some or all of the hydrogen atoms bonded to carbon atoms within the above groups have been substituted with halogen atoms (specific examples of which are listed above) or the like. The component (A) may or may not include hydroxyl groups as a portion of the R³ groups, and the proportion of R³ groups that are hydroxyl groups is typically within a range from 0.001 to 10 mol%, and preferably from 0.02 to 2 mol% of all the R³ groups.
a represents a positive number within a range from 0.96 to 1.01, and preferably from 0.98 to 1.01. b represents a positive number within a range from 0.0001 to 0.01, and preferably from 0.0005 to 0.005. c represents a positive number within a range from 0.96 to 1.06, and preferably from 0.98 to 1.01. a+b+c satisfies 1.98 ≤ a+b+c ≤ 2.02, and preferably satisfies 1.99 ≤ a+b+c ≤ 2.01.

The viscosity at 25°C of the organopolysiloxane of the component (A) is not less than 10,000 mPa·s, and is preferably within a range from 100,000 to 100,000,000 mPa·s. In order to ensure that the component (A) exhibits no self-fluidity at room temperature (25°C) and exists in a so-called crude rubber state, the lower limit for the viscosity is preferably at least 1,000,000 mPa·s, and is more preferably 10,000,000 mPa·s or higher.

The polymerization degree of the component (A) (namely, the number of siloxane units that constitute the main chain), reported as a weight average polymerization degree, is preferably not less than 500, and is more preferably 1,000 or greater. Although there are no particular restrictions on the upper limit for the polymerization degree, the upper limit, reported as a weight average polymerization degree, is, for example, not more than 100,000, and is particularly not more than 10,000. The weight average polymerization degree can be determined by measuring the polystyrene-referenced weight average molecular weight of the component (A) by gel permeation chromatography (hereafter abbreviated as "GPC"), and then calculating the weight average polymerization degree using the formula below:

Weight average polymerization degree = weight average molecular weight / molecular weight of a siloxane unit within the component (A).

In those cases where the component (A) contains a plurality of different siloxane units, the "molecular weight of a siloxane unit within the component (A)" within the above formula describes the number average molecular weight of the plurality of siloxane units, which can be determined by averaging the molecular weights of the various siloxane units contained within the raw materials used in producing the component (A) in accordance with the number of mols of each siloxane unit included within the component (A).

The organopolysiloxane of the component (A) is generally a linear diorganopolysiloxane in which the main chain consists of repeating diorganosiloxane units and both molecular chain terminals are blocked with silanol groups (namely, the hydroxyl group within a hydroxydiorganosiloxy group) or triorganosiloxy groups. Specific examples of the component (A) include:
methyltrifluoropropylpolysiloxane with both terminals blocked with vinyldimethylsiloxy groups,
copolymers of methyltrifluoropropylsiloxane and methylvinylsiloxane with both terminals blocked with silanol groups,
copolymers of methyltrifluoropropylsiloxane and methylvinylsiloxane with both terminals blocked with trimethylsiloxy groups,
copolymers of methyltrifluoropropylsiloxane and methylvinylsiloxane with both terminals blocked with vinyldimethylsiloxy groups,
copolymers of methyltrifluoropropylsiloxane, methylvinylsiloxane and methylphenylsiloxane with both terminals blocked with vinyldimethylsiloxy groups,
copolymers of methyltrifluoropropylsiloxane, methylvinylsiloxane and diphenylsiloxane with both terminals blocked with vinyldimethylsiloxy groups,
methyltrifluoropropylpolysiloxane with one terminal blocked with a vinyldimethylsiloxy group and the other terminal blocked with a silanol group,
copolymers of methyltrifluoropropylsiloxane and methylvinylsiloxane with one terminal blocked with a vinyldimethylsiloxy group and the other terminal blocked with a silanol group,
copolymers of methyltrifluoropropylsiloxane and diphenylsiloxane with one terminal blocked with a vinyldimethylsiloxy group and the other terminal blocked with a silanol group,
copolymers of methyltrifluoropropylsiloxane and methylphenylsiloxane with one terminal blocked with a vinyldimethylsiloxy group and the other terminal blocked with a silanol group,
copolymers of methyltrifluoropropylsiloxane, methylvinylsiloxane and methylphenylsiloxane with both terminals blocked with trimethylsiloxy groups,
copolymers of methyltrifluoropropylsiloxane, methylvinylsiloxane and diphenylsiloxane with both terminals blocked with trimethylsiloxy groups,
copolymers of methyltrifluoropropylsiloxane, methylvinylsiloxane and methylphenylsiloxane with both terminals blocked with silanol groups,
copolymers of methyltrifluoropropylsiloxane, methylvinylsiloxane and diphenylsiloxane with both terminals blocked with silanol groups,
copolymers of methyltrifluoropropylsiloxane, methylvinylsiloxane and methylphenylsiloxane with one terminal blocked with a vinyldimethylsiloxy group and the other terminal blocked with a silanol group, and
copolymers of methyltrifluoropropylsiloxane, methylvinylsiloxane and diphenylsiloxane with one terminal blocked with a vinyldimethylsiloxy group and the other terminal blocked with a silanol group.

The organopolysiloxane of the component (A) can be produced using conventional methods. For example, the organopolysiloxane can be produced in accordance with the method disclosed in USP 4,988,758, wherein a siloxane oligomer represented by a formula (2) shown below: 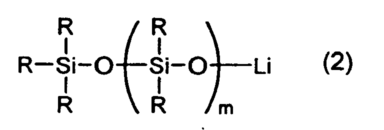 (wherein each R independently represents a hydroxyl group, an unsubstituted monovalent aliphatic saturated hydrocarbon group of 1 to 8 carbon atoms, an unsubstituted or substituted monovalent aromatic hydrocarbon group of 6 to 8 carbon atoms, or an unsubstituted or substituted monovalent aliphatic unsaturated hydrocarbon group of 2 to 8 carbon atoms (namely, an R² or R³ group), and m represents an integer of 0 to 30)
is used as an initiator to conduct a ring-opening polymerization of a trifluoropropyl group-containing cyclotrisiloxane represented by a formula: (R¹RSiO)₃ (wherein R¹ and R are as defined above).

### [Component (B)]

The silica-based filler of the component (B) is added to the composition of the present invention as a reinforcing filler to enable the production of a silicone rubber with superior mechanical strength. In order to achieve this improvement in mechanical strength, the specific surface area of the component (B) is preferably not less than 50 m²/g, and is more preferably within a range from 100 to 400 m²/g. The specific surface area can be measured, for example, using a nitrogen gas adsorption method, and in particular the BET method. The component (B) may be either a single silica-based filler or a combination of two or more different fillers.

Examples of the silica-based filler (reinforcing filler) of the component (B) include fumed silica (dry silica), calcined silica, and precipitated silica (wet silica). Further, the surface of the silica may also be subjected to a hydrophobic treatment using a silicon compound such as an organopolysiloxane, organopolysilazane, chlorosilane or alkoxysilane. Accordingly, the component (B) comprises both silica-based fillers whose surface has not been subjected to the above hydrophobic treatment and silica-based fillers whose surface has been subjected to the above hydrophobic treatment.

The amount added of the component (B) is typically within a range from 2 to 100 parts by mass, and preferably from 5 to 60 parts by mass, per 100 parts by mass of the organopolysiloxane of the component (A). An amount of less than 2 parts by mass is too small, and the component (B) is unable to generate a satisfactory reinforcing effect. If the amount added exceeds 100 parts by mass, then the workability of the resulting composition tends to deteriorate, and the physical properties of the obtained fluorosilicone rubber also tend to be prone to deterioration.

### [Component (C)]

The hydrotalcite-based inorganic anion exchanger of the component (C) is an inorganic anion exchanger composed of a hydrotalcite, and by adding the component (C) to a composition of the present invention together with the components (A), (B) and (D), the heat resistance of the resulting fluorosilicone rubber can be effectively improved. The component (C) may be either a single material or a combination of two or more different materials.

Examples of hydrotalcites include compounds with a layered structure comprising magnesium ions, other metal ions (such as aluminum ions), hydroxide ions, carbonate ions and crystallization water. For example, the carbonate ions within these crystal structures are readily substituted with fluoride ions derived from hydrofluoric acid (HF) that is thought to be generated during the oxidative degradation process of trifluoropropyl groups at high temperatures of 200°C or higher, causing the fluoride ions to be incorporated within the crystal structure. In other words, the component (C) is able to effectively trap fluoride ions, which are thought to cause siloxane unit decomposition and oxidative degradation in the component (A). In particular, fluoride ions generated from the fluorosilicone rubber under high temperature conditions of 200°C or higher can be trapped by the component (C), which prevents the fluoride ions from causing cleavage of the silicone main chain, thereby effectively improving the heat resistance of the fluorosilicone rubber.

Specific examples of the component (C) include magnesium and aluminum-based hydrotalcite-based inorganic anion exchangers. Preferably, examples of the magnesium and aluminum-based hydrotalcite-based inorganic anion exchangers include compounds represented by the formula shown below:

MgₓAl_{y}(OH)_{z}(CO₃)_{w}·kH₂O

(wherein x is a positive number and satisfies 3 ≤ x ≤ 10, y is a positive number and satisfies 1 ≤ y ≤ 3, z is zero or a positive number and, when z is a positive number, z satisfies 0 < z ≤ 30, w is zero or a positive number and, when w is a positive number, w satisfies 0 < w ≤ 20, z and w are not 0 at the same time, and k is zero or a positive number and, when k is a positive number, k satisfies 0 < k ≤ 10, provided that x, y, z and w satisfy x ≥ y and 2x+3y = z+2w). Specific examples of the magnesium and aluminum-based hydrotalcite-based inorganic anion exchangers include commercially available hydrotalcite-based inorganic anion exchangers such as IXE-700F (a product name, manufactured by Toagosei Co., Ltd.) and DHT-4A (a product name, manufactured by Kyowa Chemical Industry Co., Ltd.).

The amount added of the component (C) is typically within a range from 0.1 to 20 parts by mass, preferably from 0.5 to 10 parts by mass, and more preferably from 1 to 5 parts by mass, per 100 parts by mass of the organopolysiloxane of the component (A). If this amount is less than 0.1 parts by mass, then the component (C) is unable to adequately trap the fluoride ions, making it difficult to improve the heat resistance of the resulting fluorosilicone rubber. If the amount exceeds 20 parts by mass, then the physical properties of the resulting fluorosilicone rubber, and particularly the tensile strength and the breaking elongation, tend to deteriorate.

### [Component (D)]

By adding the curing agent of the component (D) to the fluorosilicone rubber composition of the present invention and then vulcanizing the composition using a normal method, a cured product can be obtained. Conventional curing agents can be used as the component (D), and specific examples include organic peroxides (radical reaction curing agents), and combinations of a platinum group metal-based catalyst and an organohydrogenpolysiloxane (addition reaction curing agents). Organic peroxides are preferred. The component (D) may be either a single curing agent or a combination of two or more different curing agents. In those cases where an addition reaction curing agent is used as the component (D), the organopolysiloxane of the component (A) contains at least two of the monovalent aliphatic unsaturated hydrocarbon groups represented by R² within each molecule.

Specific examples of the organic peroxides include benzoyl peroxide, t-butyl perbenzoate, o-methylbenzoyl peroxide, p-methylbenzoyl peroxide, di-t-butyl peroxide, dicumyl peroxide, 1,1-bis(t-butylperoxy)-3,3,5-trimethylcyclohexane, 2,5-dimethyl-2,5-di(t-butylperoxy)hexane, and 2,5-dimethyl-2,5-di(t-butylperoxy)hexyne. These compounds may be used either individually, or in combinations of two or more different compounds. The amount added of the organic peroxide need only be sufficient to ensure effective curing of the fluorosilicone rubber composition of the present invention, and is preferably within a range from 0.1 to 5 parts by mass per 100 parts by mass of the composition.

Examples of the platinum group metal-based catalyst include platinum group metals such as platinum (including platinum black), rhodium and palladium, as well as platinum compounds such as chloroplatinic acid, complexes of chloroplatinic acid with an olefin or vinylsiloxane, and alcohol solutions thereof. The amount added of the platinum group metal-based catalyst need only be sufficient to ensure effective activity as a hydrosilylation reaction catalyst, and is preferably sufficient to provide a mass of the platinum group metal equivalent to 1 to 2,000 ppm relative to the mass of the component (A).

The organohydrogenpolysiloxane used contains two or more (typically from 2 to 300), and preferably three or more (for example, 3 to 200), hydrogen atoms bonded directly to silicon atoms (hereafter referred to as SiH groups). The molecular structure of the organohydrogenpolysiloxane may be a linear, branched, cyclic or three dimensional network structure, and the number of silicon atoms within a single molecule of the organohydrogenpolysiloxane (that is, the polymerization degree) is typically within a range from 2 to 300, preferably from 3 to 200, and more preferably from 4 to 100. Specific examples of the organohydrogenpolysiloxane include dimethylpolysiloxane with both molecular chain terminals blocked with dimethylhydrogensiloxy groups, copolymers of dimethylsiloxane and methylhydrogensiloxane with both molecular chain terminals blocked with trimethylsiloxy groups, copolymers of dimethylsiloxane and methylhydrogensiloxane with both molecular chain terminals blocked with dimethylhydrogensiloxy groups, 1,3,5,7-tetrahydrogen-1,3,5,7-tetramethylcyclotetrasiloxane, 1,3-dihydrogen-1,1,3,3-tetramethyldisiloxane, tris(dimethylhydrogensiloxy)methylsilane, methylhydrogenpolysiloxane with both molecular chain terminals blocked with trimethylsiloxy groups, and methylhydrogenpolysiloxane with both molecular chain terminals blocked with dimethylhydrogensiloxy groups. There are no particular restrictions on the amount added of the organohydrogenpolysiloxane, provided it is sufficient to enable curing of the composition of the present invention, although an amount that provides from 0.5 to 5 SiH groups within the organohydrogenpolysiloxane per single monovalent aliphatic unsaturated hydrocarbon group such as an alkenyl group within the organopolysiloxane of the component (A) is preferred.

### [Other components]

If required, other components may also be added to the fluorosilicone rubber composition of the present invention, including non-reinforcing fillers such as non-reinforcing silica (for example, crushed quartz (crystalline silica) or diatomaceous earth) and calcium carbonate; additives such as colorants, flame retardancy improvers and thermal conductivity improvers; release agents; and dispersants such as alkoxysilanes, diphenylsilanediol, carbon functional silanes, and low molecular weight siloxanes with both terminals blocked with silanol groups. Needless to say, known heat resistance improvers may also be added to further improve the heat resistance of the composition of the present invention, and examples of these known heat resistance improvers include cerium oxide, iron oxide, various forms of carbon, and titanium oxide and the like.

### [Preparation of the composition]

The fluorosilicone rubber composition of the present invention can be obtained by uniformly mixing the above components (A) to (D), and any other components that are added as necessary, using a rubber mixing device such as a twin-roll mill, Banbury mixer or dough mixer (kneader). These components may all be mixed simultaneously, or may be added at separate times to the mixture.

### [Molding and curing method]

There are no particular restrictions on the method used for molding and curing the fluorosilicone rubber composition of the present invention, and for example, the composition of the present invention may be molded into a desired shape using a typical rubber molding method such as compression molding, transfer molding, injection molding, extrusion molding or calender molding, and then performing curing, either at room temperature or by heating at a temperature within a range from approximately 80 to 180°C, thereby forming a rubber molded item such as a turbo air hose, O-ring, diaphragm, packing or gasket or the like. Particularly in those cases where a turbo air hose is to be formed, the composition of the present invention is preferably molded using an extrusion molding method or calender molding method, and subsequently cured using a vulcanization method such as steam vulcanization or normal-pressure hot-air vulcanization. If necessary, the obtained molded item may be subjected to secondary vulcanization by heating at 180 to 250°C for a period of 1 to 10 hours.

### EXAMPLES

A more detailed description of the present invention is provided below based on a series of examples and comparative examples, although the present invention is in no way limited by the examples presented below. In the examples, polymerization degree values refer to weight average polymerization degree values determined by GPC analysis as described above.

### (Examples 1 and 2, Comparative examples 1 to 3)

### - Preparation of base compound A

First, a base compound A was prepared using the method described below. Namely, 100 parts by mass of an organopolysiloxane represented by formula (3) shown below that existed in a crude rubber state at room temperature (25°C), 20 parts by mass of a dry silica A (product name: Aerosil (a registered trademark) 200, manufactured by Nippon Aerosil Co., Ltd.) and 4 parts by mass of diphenylsilanediol as a dispersant were mixed uniformly together, and following heating at 150°C for 4 hours, the mixture was masticated and plasticized in a twin-roll mill, thus yielding a base compound A. 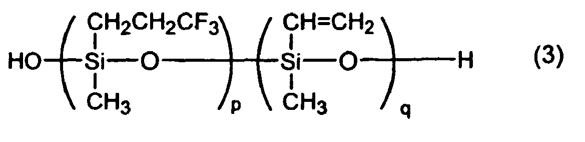 (wherein p+q (namely, the polymerization degree) is approximately 4,000, and q/(p+q) (namely, the proportion of vinyl group-containing siloxane units among all of the siloxane units) is 0.15 ± 0.05 mol%.)

### - Preparation of the composition

Subsequently, a cerium oxide powder with an average particle size of 1 µm and the hydrotalcite-based inorganic anion exchanger IXE-700F (a product name, manufactured by Toagosei Co., Ltd.) were added to the above base compound A using the blend amounts shown in Table 1, and the resulting mixture was mixed uniformly using a twin-roll mill. To 100 parts by mass of the thus obtained compound was added 0.8 parts by mass of a paste containing 80% by mass of 2,5-dimethyl-2,5-di(t-butylperoxy)hexane, and the resulting mixture was mixed uniformly using a twin-roll mill, thus completing preparation of a fluorosilicone rubber composition.

The initial physical properties and the properties following a heat resistance test were measured for the obtained composition using the methods described below.

### -Measurement of initial physical properties

The physical properties (hardness, tensile strength, and breaking elongation) were measured in accordance with the measurement methods prescribed in JIS K6249. The obtained composition was subjected to compression molding and curing by heating at 165°C for 10 minutes, followed by post curing at 200°C for 4 hours, thus forming a sheet-like test piece with a thickness of 2 mm that was used for measuring the hardness, and dumbbell-shaped test pieces prescribed in the above JIS standard that were used for measuring the tensile strength and the breaking elongation. The thus prepared test pieces were then used to measure the physical properties listed above. The results are shown in Table 1.

### - Measurement of physical properties following heat resistance test

Test pieces prepared in the same manner as that described for measuring the initial physical properties were subjected to a heat resistance test by being left to stand for 72 hours inside a dryer set to 250°C. Following completion of the test, the test pieces were air-cooled at room temperature for 12 hours, and the physical properties listed above were then measured. The results are shown in Table 1.

**[Table 1]**

| Composition (parts by mass) | Example 1 | Example 2 | Comparative example 1 | Comparative example 2 | Comparative example 3 |
|---|---|---|---|---|---|
| Base compound A | 100 | 100 | 100 | 100 | 100 |
| Cerium oxide powder | 1 | 1 | 1 | 1 | 1 |
| IXE-700F (manufactured by Toagosei Co., Ltd.) | 1 | 5 | | 0.01 | 30 |
| Initial physical properties | | | | | |
| Hardness (durometer A) | 41 | 43 | 40 | 40 | 75 |
| Tensile strength (MPa) | 10.2 | 10.0 | 10.5 | 10.4 | 7.3 |
| Breaking elongation (%) | 450 | 420 | 470 | 470 | 180 |
| Physical properties following heat resistance test (250°C, 72 hours) | | | | | |
| Change in hardness (points)* | -7 | -5 | -15 | -15 | -3 |
| Change in tensile strength (%)* | -39 | -35 | -80 | -78 | -32 |
| Change in breaking elongation (%)* | -22 | -18 | -30 | -28 | -15 |

| | | | | | |
|---|---|---|---|---|---|
| * The change in hardness was calculated as (hardness following heat resistance test - initial hardness), whereas the changes in tensile strength and breaking elongation were calculated as (measured value following heat resistance test - initial measured value) / initial measured value × 100. | | | | | |

From Table 1 it is evident that the fluorosilicone rubber compositions for which the blend amount of the hydrotalcite-based inorganic anion exchanger was within a predetermined range (namely, the compositions of the examples) yielded fluorosilicone rubber molded items that exhibited superior heat resistance to the molded items obtained from the fluorosilicone rubber compositions in which the amount of the hydrotalcite-based inorganic anion exchanger was less than the predetermined range (namely, the compositions of comparative examples 1 and 2). Furthermore, it is also clear that the compositions of the examples yielded fluorosilicone rubber molded items that exhibited superior hardness, tensile strength and breaking elongation to the molded item obtained from the fluorosilicone rubber composition in which the amount of the hydrotalcite-based inorganic anion exchanger exceeded the predetermined range (namely, the composition of comparative example 3).

## Claims

1. A fluorosilicone rubber composition consisting of:
(A) an organopolysiloxane with a viscosity at 25°C of not less than 10,000 mPa·s, represented by an average composition formula (1) shown below:
R¹ₐR²_{b}R³_{c}SiO(_{4-a-b-c)/2} (1)
wherein
R¹ represents a trifluoropropyl group,
each R² independently represents an unsubstituted or substituted monovalent aliphatic unsaturated hydrocarbon group of 2 to 8 carbon atoms,
each R³ independently represents a hydroxyl group, an unsubstituted monovalent aliphatic saturated hydrocarbon group of 1 to 8 carbon atoms, or an unsubstituted or substituted monovalent aromatic hydrocarbon group of 6 to 8 carbon atoms,
a is a positive number within a range from 0.96 to 1.01, b is a positive number within a range from 0.0001 to 0.01, and c is a positive number within a range from 0.96 to 1.06, provided that a+b+c satisfies 1.98 ≤ a+b+c ≤ 2.02,
in an amount of 100 parts by mass,
(B) a silica-based filler, in an amount of 2 to 100 parts by mass,
(C) a magnesium and aluminum-based hydrotalcite-based inorganic anion exchanger, in an amount of 0.1 to 20 parts by mass, and
(D) a curing agent, in an effective amount, and optionally at least one component selected from the group consisting of a non-reinforcing filler, a colorant, a flame retardancy improver, a thermal conductivity improver, a release agent, a dispersant, and a heat resistance improver.

2. The composition according to claim 1, wherein component (A) comprises a hydroxyl group as R³, and a proportion of R³ groups that are hydroxyl groups is within a range from 0.001 to 10 mol% of all R³ groups.

3. The composition according to either claim 1 or 2, wherein a polymerization degree of component (A) is not less than 500.

4. The composition according to any one of claims 1 to 3, wherein a specific surface area of component (B) is not less than 50 m²/g.

5. The composition according to any one of claims 1 to 4, wherein component (B) is a fumed silica, a calcined silica, a precipitated silica, or a combination thereof.

6. The composition according to any one of claims 1 to 5, wherein an amount added of component (C) is within a range from 0.5 to 10 parts by mass per 100 parts by mass of said organopolysiloxane of component (A).

7. The composition according to any one of claims 1 to 6, wherein component (D) is at least one of (D1) an organic peroxide and (D2) a combination of a platinum group metal-based catalyst and an organohydrogenpolysiloxane.

8. The composition according to claim 1, wherein the component (C) is IXE-700F(a product name, manufactured by Toagosei Co., Ltd.).

9. The composition according to claim 1, wherein the component (C) is a compound represented by the formula shown below:
MgₓAl_{y}(OH)_{z}(CO₃)_{w} · kH₂O
, wherein x is a positive number and satisfies 3 ≤ x ≤ 10, y is a positive number and satisfies 1 ≤ y ≤ 3, z is zero or a positive number and, when z is a positive number, z satisfies 0 < z ≤ 30, w is zero or a positive number and, when w is a positive number, w satisfies 0< w ≤ 20, z and w are not 0 at the same time, and k is zero or a positive number and, when k is a positive number, k satisfies 0 < k ≤ 10, provided that x, y, z and w satisfies x ≥ y and 2x+3y = z+2w.

10. A cured product, obtained by curing the composition defined in any one of claims 1 to 7.

11. A fluorosilicone rubber molded item, formed from a cured product defined in claim 10.

12. The molded item according to claim 11, which is a rubber molded item selected from the group consisting of a turbo air hose, an O-ring, a diaphragm, a packing and a gasket.

## Patentansprüche

1. Fluorsilicongummizusammensetzung bestehend aus:
(A) einem Organopolysiloxan mit einer Viskosität bei 25 °C von nicht weniger als 10.000 mPa·s, dargestellt durch eine unten gezeigte, durchschnittliche Zusammensetzungsformel (1):
R¹ₐR²_{b}R³_{c}SiO_{(4-a-b-c)/2} (1),
wobei
R¹ eine Trifluorpropylgruppe darstellt,
jedes R² unabhängig eine unsubstituierte oder substituierte einwertige aliphatische ungesättigte Kohlenwasserstoffgruppe mit 2 bis 8 Kohlenstoffatomen darstellt,
jedes R³ unabhängig eine Hydroxylgruppe, eine unsubstituierte einwertige aliphatische gesättigte Kohlenwasserstoffgruppe mit 1 bis 8 Kohlenstoffatomen oder eine unsubstituierte oder substituierte einwertige aromatische Kohlenwasserstoffgruppe mit 6 bis 8 Kohlenstoffatom darstellt,
a eine positive Zahl innerhalb eines Bereichs von 0,96 bis 1,01, b eine positive Zahl innerhalb eines Bereichs von 0,0001 bis 0,01 und c eine positive Zahl innerhalb eines Bereichs von 0,96 bis 1,06 ist, vorausgesetzt, dass a+b+c 1,98 ≤ a+b+c ≤ 2,02 entspricht,
in einer Menge von 100 Massenteilen,
(B) einem Füllstoff auf der Basis von Siliciumdioxid in einer Menge von 2 bis 100 Massenteilen,
(C) einem auf Magnesium und Aluminium basierenden anorganischen Anionenaustauscher auf der Basis von Hydrocalcit in einer Menge von 0,1 bis 20 Massenteilen und
(D) einem Aushärtungsmittel in einer wirksamen Menge und wahlweise mindestens einer Komponente ausgewählt aus der Gruppe bestehend aus einem nicht verstärkenden Füllstoff, einem Farbmittel, einem Verbesserer des Flammverzögerungsvermögens, einem Verbesserer des Wärmeleitvermögens, einem Trennmittel, einem Dispergiermittel und einem Verbesserer der Wärmewiderstandsfähigkeit.

2. Zusammensetzung nach Anspruch 1, wobei die Komponente (A) eine Hydroxylgruppe als R³ aufweist und ein Anteil von R³-Gruppen, die Hydroxylgruppen sind, innerhalb eines Bereichs von 0,001 bis 10 Mol-% aller R³-Gruppen liegt.

3. Zusammensetzung nach einem von Anspruch 1 oder 2, wobei ein Polymerisationsgrad der Komponente (A) nicht weniger als 500 beträgt.

4. Zusammensetzung nach einem der Ansprüche 1 bis 3, wobei ein spezifischer Oberflächenbereich der Komponente (B) nicht weniger als 50 m²/g beträgt.

5. Zusammensetzung nach einem der Ansprüche 1 bis 4, wobei die Komponente (B) ein pyrogenes Siliciumdioxid, ein calciniertes Siliciumdioxid, ein ausgefälltes Siliciumdioxid oder eine Kombination davon ist.

6. Zusammensetzung nach einem der Ansprüche 1 bis 5, wobei eine hinzugegebene Menge der Komponente (C) innerhalb eines Bereichs von 0,5 bis 10 Massenteilen pro 100 Massenteilen des Organopolysiloxans der Komponente (A) liegt.

7. Zusammensetzung nach einem der Ansprüche 1 bis 6, wobei die Komponente (D) mindestens eine von (D1) einem organischen Peroxid und (D2) einer Kombination eines Katalysators auf der Basis eines Metalls der Platingruppe und eines Organohydrogenpolysiloxans ist.

8. Zusammensetzung nach Anspruch 1, wobei die Komponente (C) IXE-700F (Name eines Produkts, das von Toagosei Co., Ltd. hergestellt wird) ist.

9. Zusammensetzung nach Anspruch 1, wobei die Komponente (C) eine Verbindung ist, die durch die unten gezeigte Formel dargestellt ist:
MgₓAl_{y}(OH)_{z}(CO₃)_{w}·kH₂O
wobei x eine positive Zahl ist und 3 ≤ x ≤ 10 entspricht, y eine positive Zahl ist und 1 ≤ y ≤ 3 entspricht, z null oder eine positive Zahl ist und, wenn z eine positive Zahl ist, z 0 < z ≤ 30 entspricht, w null oder eine positive Zahl ist und wenn, w eine positive Zahl ist, w 0 < w ≤ 20 entspricht, z und w nicht gleichzeitig 0 sind und k null oder eine positive Zahl ist und, wenn k eine positive Zahl ist, k 0 < k ≤ 10 entspricht, vorausgesetzt, dass x, y, z und w erfüllen, dass x ≥y und 2x+3y = z+2w sind.

10. Ausgehärtetes Produkt, das durch Aushärten der in einem der Ansprüche 1 bis 7 definierten Zusammensetzung erhalten wird.

11. Geformter Artikel aus Fluorsilicongummi, der aus einem in Anspruch 10 definierten ausgehärteten Produkt gebildet wird.

12. Geformter Artikel nach Anspruch 11, der ein geformter Gummiartikel ausgewählt aus der Gruppe bestehend aus einem Turboluftschlauch, einem O-Ring, einer Membran, einer Dichtung und einer Dichtungsscheibe ist.

## Revendications

1. Composition de caoutchouc de fluorosilicone se composant de :
(A) un organopolysiloxane ayant une viscosité à 25 °C supérieure ou égale à 10 000 MPa.s, représenté par une composition moyenne de formule (1) illustrée ci-dessous :
R¹ₐR²_{b}R³_{c}SiO_{(4-a-b-c)/2} (1)
dans laquelle
R¹ représente un groupe trifluoropropyle,
chaque R² représente indépendamment un groupe hydrocarboné, insaturé, aliphatique, monovalent, non substitué ou substitué de 2 à 8 atomes de carbone,
chaque R³ représente indépendamment un groupe hydroxyle, un groupe hydrocarboné saturé, aliphatique, monovalent, non substitué de 1 à 8 atomes de carbone ou un groupe hydrocarboné aromatique, monovalent, non substitué ou substitué de 6 à 8 atomes de carbone,
a est un nombre positif compris dans la plage allant de 0,96 à 1,01, b est un nombre positif compris dans la plage allant de 0,0001 à 0,01, et c est un nombre positif compris dans la plage allant de 0,96 à 1,06, à condition que a + b + c satisfasse 1,98 ≤ a + b + c ≤ 2,02,
en une quantité de 100 parties en poids,
(B) une charge à base de silice, en une quantité de 2 à 100 parties en poids,
(C) une résine inorganique échangeuse d'anions, à base d'hydrotalcite, à base d'aluminium et de magnésium, en une quantité de 0,1 à 20 parties en poids, et
(D) un agent de durcissement, en une quantité efficace, et facultativement au moins un composant choisi dans le groupe constitué par une charge non renforçante, un colorant, un agent ignifuge, un améliorateur de la conductivité thermique, un agent démoulant, un agent dispersant et un améliorateur de la résistance à la chaleur.

2. Composition selon la revendication 1, dans laquelle le composant (A) comprend un groupe hydroxyle en tant que R³ et une proportion des groupes R³ qui sont des groupes hydroxyle est comprise dans la plage allant de 0,001 à 10 % en poids de tous les groupes R³.

3. Composition selon la revendication 1 ou 2, dans laquelle un degré de polymérisation du composant (A) est supérieur ou égal à 500.

4. Composition selon l'une quelconque des revendications 1 à 3, dans laquelle une surface spécifique du composant (B) est supérieure ou égale à 50 m²/g.

5. Composition selon l'une quelconque des revendications 1 à 4, dans laquelle le composant (B) est une silice fumée, une silice calcinée, une silice précipitée ou une combinaison de celles-ci.

6. Composition selon l'une quelconque des revendications 1 à 5, dans laquelle une quantité ajoutée du composant (C) est comprise dans la plage allant de 0,5 à 10 parties en poids pour 100 parties en poids dudit organopolysiloxane du composant (A).

7. Composition selon l'une quelconque des revendications 1 à 6, dans laquelle le composant (D) est au moins l'un de (D1) un peroxyde organique et (D2) une combinaison d'un catalyseur à base d'un métal du groupe du platine et d'un organohydrogénopolysiloxane.

8. Composition selon la revendication 1, dans laquelle le composant (C) est IXE-700F (un nom de produit, fabriqué par Toagosei Co., Ltd.).

9. Composition selon la revendication 1, dans laquelle le composant (C) est un composé représenté par la formule illustrée ci-dessous :
MgₓAl_{y}(OH)_{z}(CO₃)_{w} · kH₂O
dans laquelle x est un nombre positif et satisfait 3 ≤ x ≤ 10, y est un nombre positif et satisfait 1 ≤ y ≤ 3, z vaut zéro ou est un nombre positif et, lorsque z est un nombre positif, z satisfait 0 < z ≤ 30, w vaut zéro ou est un nombre positif et, lorsque w est un nombre positif, w satisfait 0 < w ≤ 20, z et w ne valent pas 0 en même temps, et k vaut zéro ou est un nombre positif et, lorsque k est un nombre positif, k satisfait 0 < k ≤ 10, à condition que x, y, z et w satisfassent x ≥ y et 2x + 3y = z + 2w.

10. Produit durci, obtenu par durcissement de la composition définie selon l'une quelconque des revendications 1 à 7.

11. Article moulé en caoutchouc de fluorosilicone, formé à partir d'un produit durci défini selon la revendication 10.

12. Article moulé selon la revendication 11, qui est un article moulé en caoutchouc choisi dans le groupe constitué par une conduite d'air de turbine, un joint torique, un diaphragme, un emballage et un joint d'étanchéité.
